# EUROPÄISCHE PATENTSCHRIFT

(11) **EP 2 691 263 B1**
(45) Veröffentlichungstag und Bekanntmachung des Hinweises auf die Patenterteilung: **02.09.2020**
(21) Anmeldenummer: 12711147.4
(22) Anmeldetag: 22.03.2012
(51) Int. Cl.: B60Q 1/14

(54) **VERFAHREN UND STEUERGERÄT ZUM EINSCHALTEN EINES FERNLICHTS EINES FAHRZEUGS**
METHOD AND CONTROL APPLIANCE FOR SWITCHING ON A MAIN BEAM OF A VEHICLE
PROCÉDÉ ET APPAREIL DE COMMANDE POUR ÉCLAIRER LES FEUX DE ROUTE D'UN VÉHICULE

(30) Priorität: 31.03.2011 DE 102011006550
(43) Veröffentlichungstag der Anmeldung: 05.02.2014
(73) Patentinhaber: Robert Bosch GmbH, 70442 Stuttgart (DE)
(72) Erfinder: EHLGEN, Tobias, 88212 Ravensburg (DE); FOLTIN, Johannes, 75417 Muehlacker (DE); MEISNER, Robert, 70806 Kornwestheim (DE)
(86) Internationale Anmeldenummer: PCT/EP2012/055060
(87) Internationale Veröffentlichungsnummer: WO 2012/130707

(56) Entgegenhaltungen:
- WO-A1-2011/015625
- DE-A1-102005 017 933
- DE-A1-102009 034 224

## Beschreibung

### Stand der Technik

Die vorliegende Erfindung bezieht sich auf ein Verfahren zum Einschalten eines Fernlichts eines Fahrzeugs, auf ein Steuergerät zum Einschalten eines Fernlichts eines Fahrzeugs sowie auf ein entsprechendes Computerprogrammprodukt

In dem Dokument DE 101 16 490 A1 wird ein Verfahren zum automatischen Steuern von Beleuchtungseinrichtungen insbesondere eines Kraftfahrzeugs, mit einem Helligkeitssensor vorgeschlagen. Der Helligkeitssensor gibt Signale ab und die Beleuchtungseinrichtungen werden nach einem Zeitintervall ausgeschaltet, das zu dem Zeitpunkt beginnt, an dem die Signale eine erste Schwelle überschreiten oder unterschreiten. Eine Länge des Zeitintervalls ist veränderbar, insbesondere vergrößerbar.

Das Dokument DE 10 2009 034224 A1 beschreibt eine Einschaltung eines Fernlichts eines Fahrzeugs nach Abwarten einer Wartezeit, die abhängig von Parametern des Fahrzeugs oder eines Objekts eingestellt wird.

Das Dokument WO 2011/015625 A1 befasst sich mit einer Entprellung von Lichtcharakteristikwechseln, die aus Bilddaten einer Kamera für ein Fahrzeug ermittelt werden.

### Offenbarung der Erfindung

Vor diesem Hintergrund wird mit der vorliegenden Erfindung ein Verfahren zum Einschalten eines Fernlichts eines Fahrzeugs, ein Steuergerät zum Einschalten eines Fernlichts eines Fahrzeugs sowie ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Bei einer Fahrzeugbeleuchtungsanlage können Frontscheinwerfer in zumindest zwei Betriebszuständen betrieben werden. Einer der Betriebszustände wird allgemein als Abblendlicht bezeichnet, ein weiterer Betriebszustand wird allgemein als Fernlicht bezeichnet. Wenn die Beleuchtungsanlage im Fernlicht betrieben wird, so tritt viel Licht aus dem Frontscheinwerfer aus und erhellt ein Fahrergesichtsfeld weiträumig und mit einer hohen Intensität. Wird die Beleuchtungsanlage im Abblendlicht betrieben, so ist das austretende Licht stark gerichtet und erhellt nur einen geringen Teil des Fahrergesichtsfelds vor dem Fahrzeug, um eine Blendung anderer Verkehrsteilnehmer zu verringern. Um zwischen Abblendlicht und Fernlicht zu wechseln ist ein unmittelbarer Steuerbefehl eines Fahrzeuglenkers erforderlich. Da das Fahren bei Nacht und mit Abblendlicht anstrengend ist, und Gefahren deutlich später erkannt werden können, als beim Fahren mit Fernlicht, ist es vorteilhaft, so lange wie möglich mit Fernlicht fahren zu können. Dazu muss der Fahrzeuglenker jedoch andauernd ein hohes Maß an Konzentration aufbringen, um das Fernlicht zum richtigen Zeitpunkt zu deaktivieren und erneut zum richtigen Zeitpunkt zu reaktivieren. Weil das Führen eines Fahrzeugs bei Nacht an sich schon herausfordernd für viele Fahrzeuglenker ist, wird aus Bequemlichkeit oder Vergesslichkeit bzw. Übermüdung nur noch ein verspäteter Wechsel zwischen Fernlicht und Abblendlicht oder gar kein Wechsel mehr vorgenommen. Daraus resultiert einerseits eine starke Blendung anderer Verkehrsteilnehmer mit einer entsprechenden negativen Auswirkung auf die anderen Verkehrsteilnehmer. Und andererseits fahren viele Fahrzeuglenker, nachdem sie in das Abblendlicht gewechselt haben und der andere Verkehrsteilnehmer schon passiert worden ist, weiter im Abblendlicht obwohl kein Grund mehr vorhanden ist, das Abblendlicht zu nutzen. Dadurch bewegen sich diese Fahrzeuglenker in einer Art "Blindflug" und können Gefahren nur unzureichend und zu spät erkennen.

Die Erfindung basiert auf der Erkenntnis, dass die Hauptscheinwerfer eines Fahrzeugs automatisiert von einem Abblendlicht in ein Fernlicht geschaltet werden können, wenn das Fahrzeug eine vorbestimmte Strecke zurückgelegt hat nachdem ein Grund für einen Betrieb im Abblendlicht entfallen ist. Dadurch kann basierend auf der zurückgelegten Strecke ein Punkt ermittelt werden, an dem vorteilhafterweise das Fernlicht erneut aktiviert wird. Da bei Dunkelheit ein entgegenkommendes Fahrzeug beispielsweise durch eine Lokalisierung seiner Hauptscheinwerfer erkannt werden kann, könnte bei einer unmittelbaren Aktivierung des Fernlichts, wenn die Hauptscheinwerfer des entgegenkommenden Fahrzeugs auf Höhe des eigenen Fahrzeugs sind, ein Fahrer des entgegenkommenden Fahrzeugs noch in einem Blendungsbereich der eigenen Scheinwerfer sein und geblendet werden. Dies kann durch Abwarten der vorbestimmten Strecke vermieden werden. Wenn mehrere entgegenkommende Fahrzeuge gleichzeitig im Blendungsbereich sind, dann erfolgt die Aktivierung des Fernlichts erst, wenn kein Fahrzeug mehr im Blendungsbereich ist.

Die vorliegende Erfindung schafft ein Verfahren zum Einschalten eines Fernlichts eines Fahrzeugs, mit folgenden Schritten:
Empfangen einer Aufblendinformation über eine Schnittstelle, wobei die Aufblendinformation eine Möglichkeit zum blendfreien Betreiben des Fernlichts anzeigt;
Ermitteln einer zurückgelegten Wegstrecke des Fahrzeugs, ansprechend auf das Empfangen der Aufblendinformation; und
Bereitstellen einer Einschaltinformation zum Einschalten des Fernlichts, wenn die zurückgelegte Wegstrecke nach dem Empfangen der Aufblendinformation größer als eine vorbestimmte Mindeststrecke ist, wobei die Mindeststrecke unter Berücksichtigung einer Information über eine aktuelle Verkehrsdichte bestimmt wird.

Unter einem Fernlicht kann eine Betriebsart eines Fahrzeugscheinwerfers verstanden werden, die im Vergleich zu einem Abblendlicht einen größeren horizontalen und vertikalen Ausleuchtungswinkel aufweist. Das Fernlicht kann einen vorderen Sichtbereich eines Fahrzeuglenkers weiträumig ausleuchten. Das Fernlicht kann andere Verkehrsteilnehmer bei einem direkten Anleuchten blenden und somit stören oder gefährden. Eine Aufblendinformation kann von einer Umfeld-Erkennungseinrichtung bereitgestellt werden und eine Situation repräsentieren, in der das Fernlicht betrieben werden kann, ohne die anderen Verkehrsteilnehmer zu stören oder zu blenden. Beispielsweise kann die Aufblendinformation bereitgestellt werden, wenn sich keine anderen Verkehrsteilnehmer in einem Erfassungsbereich der Umfeld-Erkennungseinrichtung befinden. Die Aufblendinformation kann auch eine Situation repräsentieren, in der von der Erkennungseinrichtung keine anderen blendbaren Verkehrsteilnehmer erkannt werden. Eine zurückgelegte Wegstrecke kann eine Weglänge repräsentieren, die das Fahrzeug zwischen zwei Wegpunkten gefahren ist. Beispielsweise kann die zurückgelegte Wegstrecke aus einer Anzahl von Radumdrehungen und einem Abrolldurchmesser des Rads ermittelt werden. Die zurückgelegte Wegstrecke kann auch durch eine Berechnung aus einer aktuellen Geschwindigkeit ermittelt werden. Unter einer vorbestimmten Mindeststrecke kann ein Sicherheitsabstand zwischen einem Wegpunkt an dem die Aufblendinformation empfangen worden ist und einem Wegpunkt an dem das Fernlicht aufgeblendet wird, verstanden werden, Der Sicherheitsabstand kann so groß sein, dass das Fernlicht erst aktiviert wird, wenn ein entgegenkommendes Fahrzeug erwartungsgemäß vollständig die Fahrzeugscheinwerfer des eigenen Fahrzeugs passiert hat. Die vorbestimmte Mindeststrecke ist veränderbar und das das Verfahren umfasst einen Schritt des Bestimmens der Mindeststrecke. Die Einschaltinformation kann über eine Schnittstelle an den Fahrzeugscheinwerfer ausgegeben werden und zur Aktivierung eines Leuchtmittels des Scheinwerfers geeignet sein.

Gemäß einer weiteren Ausführungsform der vorliegenden Erfindung kann im Schritt des Bereitstellens die Einschaltinformation bereitgestellt werden, wenn die Aufblendinformation während eines Durchfahrens der vorbestimmten mindeststrecke nach dem Empfangen der Aufblendinformation kontinuierlich Bestand hat. Sobald ein Verkehrsteilnehmer während des Zurücklegens der Mindeststrecke erkannt wird, kann die Aufblendinformation zurückgesetzt oder eine Abblendinformation bereitgestellt werden. Dies verhindert das Bereitstellen der Einschaltinformation.

Ferner kann auch im Schritt des Bereitstellens die vorbestimmte Mindeststrecke unter Berücksichtigung einer Straßenklasse auf der sich das Fahrzeug befindet zusätzlich oder alternativ einer Straßenform in einem Bereich, in dem sich das Fahrzeug befindet bestimmt werden. Unter einer Straßenklasse kann eine Straßenkategorie verstanden werden, die der Straße unter Berücksichtigung verschiedener Eigenschaften zugeordnet werden kann. Beispielsweise können Straßen nach Funktion, Lage und Umfeld klassifiziert werden. So kann eine Straße z.B. als Verbindungsstraße Innerorts mit angebauten Gebäuden klassifiziert werden. Oder z.B. als Erschließungsstraße Innerorts mit angebauten Gebäuden, oder als Verbindungsstraße Außerorts anbaufrei. Weiterhin können z.B. Verbindungsstraßen weiter unterteilt werden. Beispiele hierfür können Autobahn, Bundesstraße, Landstraße oder Gemeindestraße sein. Je nach Straßenklasse können unterschiedliche Faktoren bei einer Zuweisung der Mindeststrecke berücksichtigt werden. Beispielsweise kann die Mindeststrecke auf einer Autobahn geringer sein als auf einer Bundesstraße. Bei einer angebauten Gemeindestraße mit Straßenbeleuchtung kann eine Bereitstellung der Einschaltinformation solange unterbunden werden, bis das Fahrzeug einen Bereich der Straßenbeleuchtung verlassen hat. Unter einer Straßengestalt kann eine Hügeligkeit oder ein Höhenprofil und eine Kurvigkeit oder ein Kurvenprofil der Straße verstanden werden. Beispielsweise kann eine Straße Bodenerhebungen und/oder Kurven aufweisen, die eine maximale Sichtweite begrenzen, und damit eine Erkennungsreichweite zur Erkennung anderer Verkehrsteilnehmer verringern. In diesem Fall kann die Mindeststrecke gegenüber einem geradlinigen Straßenverlauf verlängert werden. Ebenso können die Bodenerhebungen und/oder Kurven eine effektive Reichweite des Fernlichts begrenzen. Damit kann beispielsweise das Fernlicht aktiviert werden, obwohl bereits ein anderer Verkehrsteilnehmer von der Umfeld-Erfassungseinrichtung erfasst ist, dieser sich aber nicht innerhalb eines Blendungsbereichs des Fernlichts befindet.

Entsprechend einer weiteren Ausführungsform der vorliegenden Erfindung kann im Schritt des Bereitstellens die vorbestimmte Mindeststrecke ferner unter Berücksichtigung eines aktuellen Fahrzustands des Fahrzeugs bestimmt werden. Unter einem aktuellen Fahrzustand kann eine aktuelle Geschwindigkeit des Fahrzeugs, eine aktuelle Gierrate, eine aktuelle Umgebungshelligkeit, eine aktuelle Zeit oder ein aktueller Systemzustand verstanden werden. Informationen über den aktuellen Fahrzustand können von geeigneten Sensoren bereitgestellt werden. Beispielsweise kann bei einer hohen Geschwindigkeit eine geringere Mindeststrecke bestimmt werden, als bei niedriger Geschwindigkeit. Ebenso kann bei einer geringen Gierrate eine geringere Mindeststrecke bestimmt werden, als bei einer hohen Gierrate. Bei einer hohen Umgebungshelligkeit kann eine größere Mindeststrecke bestimmt werden, als bei einer niedrigen Umgebungshelligkeit. Ein aktueller Systemzustand kann die Mindeststrecke dahingehend beeinflussen, dass bei einem Fehler beispielsweise in der Umfelderfassungseinrichtung oder Objekterkennung ein großer Standardwert für die Mindeststrecke verwendet werden kann, der zusätzliche Sicherheit gegen das Blenden anderer Verkehrsteilnehmer bieten kann. Unter einer aktuellen Verkehrslage kann eine Information über ein oder mehrere Fahrzeuge in der Umgebung des Fahrzeugs verstanden werden. Dabei kann die Information auch von fahrzeugunabhängigen Quellen empfangen werden. Die Verkehrslage kann auch von der Umfelderfassungseinrichtung bereitgestellt werden und beispielsweise eine Information über Ort, Geschwindigkeit und Bewegungsrichtung zumindest eines anderen Fahrzeugs repräsentieren. Die Information kann auch von der Umfelderfassungseinrichtung über einen zurückliegenden Zeitraum akkumuliert werden. Dabei kann besonders ein Zeitfenster von wenigen Minuten oder Sekunden berücksichtigt werden. Beispielsweise kann aus einer hohen Verkehrsdichte auf einer Gegenspur auf eine hohe Wahrscheinlichkeit weiterer Fahrzeuge auf der Gegenspur geschlossen werden, und deshalb die Mindeststrecke länger bestimmt werden. Weiterhin kann bei einem überholenden Fahrzeug anhand einer Differenzgeschwindigkeit die Mindeststrecke beeinflusst werden. So kann eine kürzere Strecke bestimmt werden, wenn eine hohe Differenzgeschwindigkeit ermittelt wird, und eine längere Mindeststrecke bestimmt werden, wenn eine niedrige Differenzgeschwindigkeit ermittelt wird.

In einer weiteren Ausführungsform mit einem Schritt des Bestimmens eines voraussichtlichen Ausschaltzeitpunkt zum Ausschalten des Fernlichts, und kann im Schritt des Bereitstellens die Einschaltinformation zum Einschalten des Fernlichts bereitgestellt werden, wenn zwischen einem Zeitpunkt des Bereitstellens der Einschaltinformation und dem voraussichtlichen Ausschaltzeitpunkt eine vorbestimmte Mindesteinschaltdauer für das Fernlicht liegt. Unter einer Mindesteinschaltdauer kann eine angestrebte minimale Leuchtdauer für das Fernlicht verstanden werden. Dadurch kann ein unnatürlich häufiger Wechsel zwischen Fern- und Abblendlicht vermieden werden und eine hohe Lebensdauer für die Scheinwerfer erreicht werden. Beispielsweise kann ein entgegenkommendes Fahrzeug bereits erkannt sein, jedoch noch nicht innerhalb eines Blendungsbereichs des Fernlichts sein. Wenn eine Zeitdauer bis zu einem erneuten Ausschalten des Fernlichts voraussichtlich kleiner sein wird, als die Mindesteinschaltdauer kann das Bereitstellen der Einschaltinformation unterdrückt werden. Dabei kann ein Übermitteln einer Falschinformation für den Fahrer des entgegenkommenden Fahrzeugs vorgebeugt werden, da ein sehr kurzzeitiges Aufblenden des Fernlichts im Allgemeinen als Warnsignal, Sondersignal oder Aufmerksamkeitssignal verstanden werden kann.

In einer zusätzlichen Ausführungsform der vorliegenden Erfindung kann im Schritt des Bereitstellens die vorbestimmte Mindeststrecke unter Berücksichtigung von zumindest einer hinterlegten Kennlinie angepasst werden, wobei die Kennlinie einen Zusammenhang zwischen der Mindeststrecke und einem aktuell ermittelten Parameter darstellt. Werte der Kennlinie können in Form einer Nachschlagetabelle gespeichert sein. Die Kennlinie kann einen vorab ermittelten Zusammenhang der beiden Größen repräsentieren. Der Zusammenhang kann nichtlinear sein. Eine der Größen kann die Mindeststrecke, ein Zuwachs oder eine Abnahme der Mindeststrecke oder ein Faktor für eine Vergrößerung oder Verkleinerung der Mindeststrecke sein. Zuwächse und Abnahmen, sowie Faktoren verschiedener Kennlinien können sich kumulieren, wobei negative Werte oder Faktoren die Mindeststrecke verringern können. Unter einem aktuell ermittelten Parameter kann ein von einem entsprechenden Fahrzeugsensor bereitgestellter Wert verstanden werden. Ebenso kann ein aktuell ermittelter Parameter ein aus mehreren Parametern bestimmter Wert sein. Beispielsweise kann der aktuelle Parameter eine aktuelle Geschwindigkeit des Fahrzeugs, eine aktuelle Gierrate des Fahrzeugs, eine Umgebungshelligkeit, eine maximale Sichtweite vor dem Fahrzeug oder eine aktuelle Tageszeit sein. Dadurch können auch komplizierte nichtlineare Zusammenhänge zwischen der Mindeststrecke und verschiedenen Faktoren sicher und einfach in die Bestimmung der Mindeststrecke einfließen.

Ferner kann gemäß einer weiteren Ausführungsform im Schritt des Bereitstellens die vorbestimmte Mindeststrecke unter Verwendung eines empirischen Fernlichtaktivierungsmodells mit zumindest zwei Eingangsgrößen bestimmt werden. Unter einem empirischen Fernlichtaktivierungsmodell kann ein, auf zurückliegenden Fahrten beruhendes vereinfachtes Abbild zur Simulation der Fernlichtaktivierung und Deaktivierung verstanden werden. Dabei können Parameter des Modells geschätzt oder gemessen werden oder auf gespeicherten Beobachtungen beruhen. Bei einer Auswertung des Modells können unscharfe Mengengrenzen der Faktoren berücksichtigt werden, und unscharfe Ergebnisse können beispielsweise durch geometrische Betrachtungen gemittelt werden. Das empirische Fernlichtaktivierungsmodell kann die Mindeststrecke als einen Parameter umfassen und in Wiederholungsschleifen seine Parameter optimieren. Dadurch können komplexe Zusammenhänge mehrerer Faktoren berücksichtigt werden um die Mindeststrecke zu bestimmen.

Weiterhin umfasst die Erfindung auch ein Steuergerät zum Einschalten eines Fernlichts eines Fahrzeugs, mit folgenden Merkmalen:
einer Einrichtung zum Empfangen einer Aufblendinformation über eine Schnittstelle, wobei die Aufblendinformation eine Möglichkeit zum blendfreien Betreiben des Fernlichts anzeigt;
einer Einrichtung zum Ermitteln einer zurückgelegten Wegstrecke des Fahrzeugs, die ansprechend auf das Empfangen der Aufblendinformation die zurückgelegte Wegstrecke ermittelt; und
einer Einrichtung zum Bereitstellen einer Einschaltinformation zum Einschalten des Fernlichts, wenn die zurückgelegte Wegstrecke nach dem Empfangen der Aufblendinformation größer als eine vorbestimmte Mindeststrecke ist, wobei die vorbestimmte Mindeststrecke unter Berücksichtigung einer Information über eine aktuelle Verkehrsdichte bestimmt wird. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:
- Fig. 1: eine Darstellung eines Fahrzeugs gemäß einem Ausführungsbeispiel der vorliegenden Erfindung;
- Fig. 2: ein Blockschaltbild eines Steuergeräts gemäß einem Ausführungsbeispiel der vorliegenden Erfindung;
- Fig. 3: ein Ablaufdiagramm eines Verfahrens zum Einschalten eines Fernlichts eines Fahrzeugs gemäß einem Ausführungsbeispiel der vorliegenden Erfindung;
- Fig. 4: einen Verfahrensstrukturplan eines Verfahrens zum Einschalten eines Fernlichts gemäß einem weiteren Ausführungsbeispiel der vorliegenden Erfindung;
- Fig. 5a: ein Diagramm einer Differenzgeschwindigkeits-Kennlinie zum Beeinflussen einer Mindeststrecke gemäß einem Ausführungsbeispiel der vorliegenden Erfindung;
- Fig. 5b: ein Diagramm einer Gierraten-Kennlinie zum Beeinflussen einer Mindeststrecke gemäß einem Ausführungsbeispiel der vorliegenden Erfindung;
- Fig. 6: eine Darstellung einer Fahrsituation gemäß einem Ausführungsbeispiel der vorliegenden Erfindung;
- Fig. 7: eine Darstellung einer weiteren Fahrsituation gemäß einem Ausführungsbeispiel der vorliegenden Erfindung ; und
- Fig. 8: eine Darstellung einer weiteren Fahrsituation gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

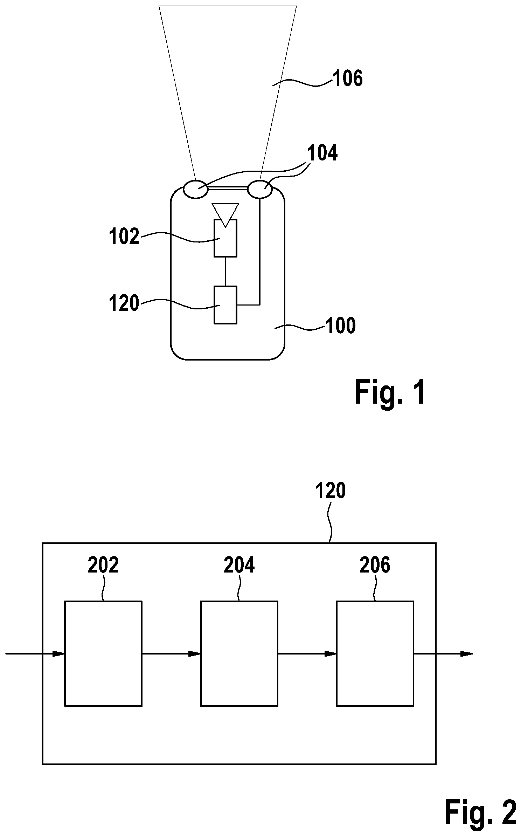

Fig. 1 zeigt eine Darstellung eines Fahrzeugs 100 gemäß einem Ausführungsbeispiel der vorliegenden Erfindung. Das Fahrzeug 100 weist eine Umfelderfassungseinrichtung 102, Scheinwerfer 104 mit Abblendlicht und Fernlicht, sowie ein Steuergerät 120 zum Einschalten des Fernlichts auf. Die Umfelderfassungseinrichtung 102 ist in diesem Ausführungsbeispiel eine Kamera 102 mit integrierter Objekterkennung. Ebenso kann die Umfelderfassungseinrichtung beispielsweise ein Radargerät sein. Die Objekterkennung ist ausgebildet, um andere Verkehrsteilnehmer zu erkennen. Die Objekterkennung ist ferner ausgebildet, um eine Aufblendinformation bereitzustellen, wenn die Kamera 102 vor dem Fahrzeug 100 in einem Blendungsbereich 106 vor dem Fahrzeug 100 keine anderen Verkehrsteilnehmer erfasst. In diesem Fall können andere Verkehrsteilnehmer von den Scheinwerfern 104 nicht geblendet werden

Fig. 2 zeigt ein Blockschaltbild eines Steuergeräts 120 gemäß einem Ausführungsbeispiel der vorliegenden Erfindung. Bei dem Steuergerät 120 kann es sich um das in Fig. 1 gezeigte Steuergerät 120 handeln. Das Steuergerät 120 kann zum Einschalten des Fernlichts des Fahrzeugs 100 eingesetzt werden. Das Steuergerät 120 ist ausgebildet, um eine Aufblendinformation zu empfangen und basierend darauf eine Einschaltinformation zu bestimmen und auszugeben. Das Steuergerät 120 weist eine Einrichtung 202 zum Empfangen einer Aufblendinformation, eine Einrichtung 204 zum Ermitteln einer zurückgelegten Wegstrecke, sowie eine Einrichtung 206 zum Bereitstellen einer Einschaltinformation auf. Die Einrichtung 202 ist ausgebildet, um die Aufblendinformation von einer Umfelderfassungseinrichtung über eine Schnittstelle zu empfangen. Die Umfelderfassungseinrichtung ist ausgebildet, um ein Fahrzeugumfeld, insbesondere ein Fahrzeugvorfeld zu erkennen und andere Verkehrsteilnehmer darin zu erkennen. Die Aufblendinformation zeigt eine Möglichkeit zum Betreiben des Fernlichts ohne die Gefahr einer Blendung anderer Verkehrsteilnehmer an. Die Einrichtung 204 ermittelt die vom Fahrzeug zurückgelegte Wegstrecke ab dem Zeitpunkt zu dem die Aufblendinformation empfangen worden ist. Wenn die zurückgelegte Wegstrecke größer als eine vorbestimmte Mindeststrecke ist stellt die Einrichtung 206 die Einschaltinformation zum Einschalten des Fernlichts bereit. Ansprechend auf die Einschaltinformation kann das Fernlicht des Fahrzeugs eingeschaltet werden.

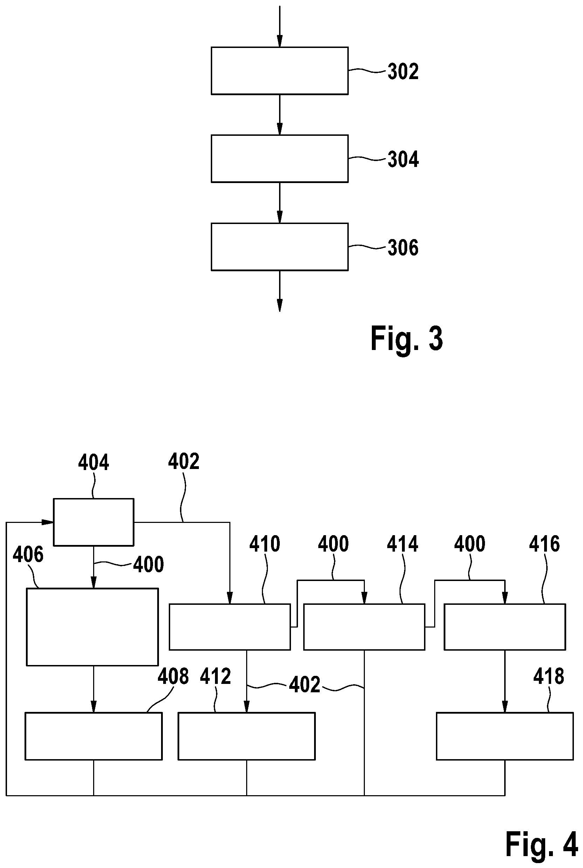

Fig. 3 zeigt ein Ablaufdiagramm eines Verfahrens zum Einschalten eines Fernlichts eines Fahrzeugs gemäß einem Ausführungsbeispiel der vorliegenden Erfindung. Das Verfahren weist einen Schritt 302 des Empfangens, einen Schritt 304 des Ermittelns, sowie einen Schritt 306 des Bereitstellens auf. Das Verfahren kann von dem in Fig. 2 gezeigten Steuergerät ausgeführt werden. Ausgangszustand des Verfahrens ist ein ausgeschaltetes Fernlicht. Nachdem eine beispielsweise in Fig. 1 gezeigte Umfelderfassungseinrichtung 102 des Fahrzeugs 100 erkannt hat, dass durch ein Aufblenden des Abblendlichts kein anderer Verkehrsteilnehmer geblendet wird, gibt die Umfelderfassungseinrichtung eine Aufblendinformation aus. Die Aufblendinformation wird im Schritt 302 des Empfangens über eine Schnittstelle eingelesen. Beginnend mit dem Einlesen der Aufblendinformation wird im Schritt 304 des Ermittelns eine Wegstrecke ermittelt, die das Fahrzeug zurücklegt. Wenn die Wegstrecke größer als eine vorbestimmte Mindeststrecke ist, wird im Schritt 306 des Bereitstellens eine Einschaltinformation zum Einschalten des Fernlichts ausgegeben. Dadurch kann eine Blendung für beispielsweise ein entgegenkommendes Fahrzeug ausgeschlossen werden, da das Fahrzeug noch die Mindeststrecke über den Punkt weiterfährt, an dem das entgegenkommende Fahrzeug den Erfassungsbereich der Umfelderfassungseinrichtung verlassen hat. Weiterhin wird durch das Abwarten der Mindeststrecke eine Dämpfung in eine Scheinwerfersteuerung eingebracht, die ein ständiges Anschalten und Ausschalten des Fernlichts vermindert. Bei mehreren aufeinanderfolgenden Verkehrsteilnehmern, insbesondere Fahrzeugen, die dem eigenen Fahrzeug entgegenkommen, kann so ein kurzzeitiges Aufblenden zwischen den Fahrzeugen vermieden werden. Die Mindeststrecke kann mittels mehrerer Einflussfaktoren vergrößert oder verkleinert werden. Beispielsweise kann bei hoher Geschwindigkeit die Mindeststrecke verkürzt werden, da angenommen werden kann, dass ein entgegenkommendes Fahrzeug ebenfalls eine hohe Geschwindigkeit aufweist und deshalb schneller aus einem Blendungsbereich herausfährt, an dem ein Fahrer des entgegenkommenden Fahrzeugs geblendet werden kann.

Gemäß der Erfindung erfolgt bei einer Informationsverarbeitung eine Einbeziehung der Verkehrsdichte in eine Ansteuerung von Lichtsystemen. Bei einem Lichtsystem, welches die Lichtverteilung abhängig von der aktuellen Verkehrsdichte anpasst, kann die Geschwindigkeit des Umschaltens von einer Lichtverteilung in die andere, anhand mehrerer Eingangsgrößen gewählt werden. Dies führt dann zu einem für den Fahrer angenehmen Verhalten und gleichzeitig zu einer möglichst optimalen Ausleuchtung der Straße. Eine Entprellzeit bei einer Funktion "High Beam Activiation", welche einen automatischen Wechsel zwischen Fern- und Abblendlicht realisiert, sollte so gewählt werden, dass zum einen der Fahrer eine optimale Ausleuchtung vor seinem Fahrzeug erhält und zum anderen, dass es zu keinem nervösen Verhalten der Scheinwerfer kommt. Bisher ist es möglich mehrere Entprellzeiten zu verwenden. Diese Entprellzeiten werden dabei aber als fix angenommen und entsprechend des Zustandes des passierenden Fahrzeugs ausgelegt. Im hier vorgestellten System werden einzelne Verkehrssituationen erkannt und die entsprechende Entprellzeit gewählt.

Im Folgenden soll eine Bestimmung einer Entprellzeit für einen Fernlichtassistent für das Umschalten zwischen Abblendlicht und Fernlicht bei der Funktion HMA (High beaM Assist) soll verdeutlicht werden. In einer Kamera werden anhand der Informationen der Kamera mehrere Verkehrssituationen, wie Autobahn, vorrausfahrender Verkehr, entgegenkommender Verkehr, oder Zu kurzes Fahren im Fernlicht klassifiziert. Für jede der genannten Situationen wird nun eine Kennlinie bestimmt, bei der beispielsweise die Geschwindigkeit über die Entprellzeit aufgetragen wird. Diese Kennlinien können nun entsprechend appliziert oder angewendet werden, sodass es ein fahrzeugspezifisches Verhalten erreicht werden kann. Es ist dabei von Vorteil, wenn die Entprellzeit bei hoher Geschwindigkeit kurz gewählt wird, um z.B. bei einem passierenden Fahrzeug die Fahrt mit Abblendlicht zu minimieren und somit eine optimale Ausleuchtung zu erhalten. Die Situation, "Zu kurzes Fahren im Fernlicht" beschreibt dabei den Fall, dass eine Kolonne das Egofahrzeug passiert und es bei oder nach der Vorbeifahrt des ersten Fahrzeuges zu einem sehr kurzen Anschalten des Fernlichtes vor dem zweiten Fahrzeug kommt. Neben den bereits genannten Situationen, können noch weiteren erkannt werden und je eine entsprechende Kennlinie für die Entprellung gewählt werden. Beispielsweise kann eine Gierrate, eine mittlere Gierrate über die letzten X-Meter, Navigationsdaten über den weiteren Verlauf der Straße, eine Länge der Erkennung eines anderen Fahrzeuges, also eine Länge des Tracks, oder ein Verhalten des Tracks innerhalb des Bildes verwendet werden. Dabei lässt eine hohe Dynamik auf einen unruhigen Verlauf der Straße schließen und damit auf eine hohe Wahrscheinlichkeit für ein plötzliches Auftauchen eines entgegenkommenden Fahrzeuges.

Gemäß einem Ausführungsbeispiel wird mittels des in Fig. 3 gezeigten Verfahrens die Entprellzeit für einen Fernlichtassistent eines Fahrzeugs bestimmt. Mit Hilfe einer DPC Kamera (Dual Purpose Camera) für Licht und Spuralgorithmen oder einer MPC Kamera (Multi Purpose Camera) für alle Funktionen auf der Kamera werden Objekte bei Nacht erkannt. Die Objekte können andere Verkehrsteilnehmer und/oder Infrastrukturobjekte sein. Eine automatische Steuerung der Scheinwerfer schaltet nun, wenn kein weiteres Fahrzeug geblendet wird, automatisch ins Fernlicht. Um ein nervöses Verhalten der Scheinwerfer zu vermeiden, wird, nachdem kein Auto mehr im Bild erkannt wurde, eine bestimmte Zeit, die hier über eine Mindeststrecke definiert ist, gewartet, bis ins Fernlicht geschaltet wird. Es wird somit eine Entprellzeit oder Wartezeit gewartet. Diese Entprellzeit wird bei herkömmlichen Ansätzen nur abhängig von den eigenen Fahrzeugparametern oder abhängig von den erkannten Objektparametern gewählt. Dabei werden die verschiedenen Wartezeiten gestartet und erst wieder ins Fernlicht geschaltet, wenn mindestens eine der Wartezeiten abgelaufen ist. Gemäß dem hier vorgestellten Ansatz wird keine Wartezeit angenommen, sondern eine Wartestrecke. Damit ergibt sich eine implizite Abhängigkeit zur Geschwindigkeit. Dies hat den Vorteil, dass die Fahrstrecke, die mit Abblendlicht gefahren wird, wenn kein anderes Fahrzeug im Sichtbereich der Kamera ist, vorgegeben ist. Des Weiteren kann mittels einer Kennlinie eine Verbindung zwischen der Geschwindigkeit und der Entprellzeit genutzt werden. Auch können verschiedene Situationen zu unterschiedlichen Entprellzeiten führen, die wiederum mittels der Fuzzy Logic kombiniert werden können. Die Entprellstrecke kann dabei abhängig von dem Straßentyp, z.B. Stadt oder Autobahn, gewählt werden, sie kann abhängig von der aktuellen Uhrzeit gewählt werden, sie kann abhängig von der Anzahl der passierten Fahrzeuge in einer Kolonne gewählt werden, sie kann abhängig von dem Höhenprofil der Fahrbahn und/oder dem Kurvenprofil der Fahrbahn gewählt werden, sie kann abhängig von der Strecke die zuvor mit Fernlicht gefahren wurde oder einem vom Fahrer vorgegebenen Profil gewählt werden. Des Weiteren kann mittels einer Verbindung zu einem entsprechenden Server, der aktuelle Verkehrsfluss auf der befahrenden Straße bestimmt werden, da somit die Wahrscheinlichkeit für ein weiteres Auftreten von Fahrzeugen steigt. Die Wartezeit bis ins Fernlicht geschaltet wird, hängt in dem vorgestellten Ansatz von mehreren unabhängigen Faktoren ab, die mit Hilfe der Fuzzy Logic zu einer gemeinsamen Entprellzeit kombiniert werden. Diese Faktoren können beispielsweise die Geschwindigkeit des Fahrzeugs, die Gierrate des Fahrzeugs, die Anzahl der Fahrzeuge, die im Abblendlicht an dem Fahrzeug vorbeigefahren sind, die mittlere Zeit oder mittlere Strecke zwischen dem letzten Wechsel vom Abblendlicht ins Fernlicht, die Strecke, die seit der letzten Laterne zurückgelegt wurde, die Hügeligkeit bzw. die Kurvigkeit der Strecke, die Umgebungshelligkeit, die Sichtweite der Kamera, sein. Wenn ein Navigationssystem vorhanden ist, dann kann aus der Uhrzeit und der Nähe zu einer urbanen Region auf ein hohes Verkehrsaufkommen geschlossen werden und die Zeit entsprechend verlängert werden. Weiterhin können Daten über den aktuellen Verkehrsfluss auf der Strecke, die Zeit und die Sicherheit, die ein erkanntes Objekt getrackt wurde, oder eine Länge des Tracks und der Straßentyp beispielsweise Autobahn oder Stadt verwendet werden.

Die Bestimmung der Entprellzeit erfolgt dabei über eine Situationsanalyse. Für die entsprechenden, verschiedenen Situationen kann jeweils eine Kennlinie hinterlegt sein, welche die resultierende Entprellzeit mit der Geschwindigkeit oder anderen Faktoren in Verbindung setzt. Des Weiteren können die verschiedenen Entprellzeiten für unterschiedliche Situationen kombiniert werden.

Fig. 4 zeigt einen Verfahrensstrukturplan eines Verfahrens zum Einschalten eines Fernlichts eines Fahrzeugs gemäß einem weiteren Ausführungsbeispiel der vorliegenden Erfindung. Das Verfahren kann in dem in Fig. 2 gezeigten Steuergerät 120 umgesetzt werden. Gezeigt ist ein Entscheidungs- und Aktionsbaum mit einer Mehrzahl von JA Verzweigungen 400 und NEIN Verzweigungen 402 und einer Mehrzahl von Schritten 404, 406, 408, 410, 412, 414, 416, 418. Auf eine erste Abfrage 404 "Fahrzeug Erkannt?" folgt, wenn ein Fahrzeug erkannt wurde, eine Aktion 406 "Werte Parameter des Fahrzeuges aus". Nach einer Auswertung der Parameter des Fahrzeugs folgt eine weitere Aktion 408 "Bestimme die Entprellzeit", in der die Parameter berücksichtigt werden. Die Entprellzeit wird über eine Mindeststrecke definiert. Nach einer Bestimmung der Entprellzeit erfolgt wieder die Abfrage 404 "Fahrzeug Erkannt?". Wenn kein Fahrzeug erkannt wird, so folgt eine Abfrage 410 "Ist Entprellzeit gestartet?". Wenn die Entprellzeit nicht gestartet ist, erfolgt anschließend eine Aktion 412 "Starte Entprellzeit", in der die Entprellzeit gestartet wird. In der Aktion 412 "Starte Entprellzeit" wird die in Aktion 408 "Bestimme die Entprellzeit" bestimmte Entprellzeit verwendet. Wenn die Entprellzeit gestartet ist, folgt erneut die Abfrage 404 "Fahrzeug Erkannt?". Wenn die Entprellzeit bei der Abfrage 410 "ist Entprellzeit gestartet?", so erfolgt eine weitere Abfrage 414 "Ist Entprellzeit abgelaufen?" ist die Entprellzeit nicht abgelaufen, erfolgt wiederum die Abfrage 404 "Fahrzeug Erkannt?". Wenn die Entprellzeit bei der Abfrage 414 abgelaufen ist, so folgt eine Aktion 416 "Schalte ins Fernlicht", in der das Fernlicht aktiviert wird. Anschließend kann eine weitere Aktion 418 "Starte Fernlichttimer" erfolgen, in der ein Fernlichttimer aktiviert wird. Wenn das Fernlicht aktiviert ist, erfolgt erneut die Abfrage 404 "Fahrzeug Erkannt?". Wenn ein Fahrzeug erkannt ist, dann wird das Fernlicht deaktiviert.

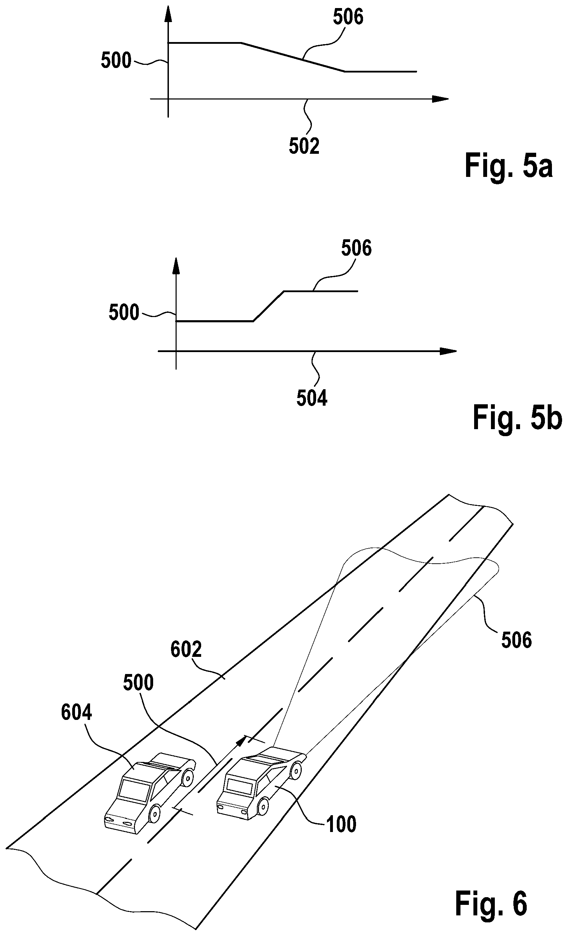

Die Figuren. 5a und. 5b zeigen je ein Diagramm einer Kennlinie zum Beeinflussen einer Mindeststrecke gemäß einem Ausführungsbeispiel der vorliegenden Erfindung. In den Diagrammen ist jeweils ein Wert s 500 auf der Ordinate aufgetragen, der die Mindeststrecke 500 oder einen Faktor für die Mindeststrecke repräsentiert. In Fig. 5a ist auf der Abszisse eine Differenzgeschwindigkeit 502 in km/h zu einem erkannten Fahrzeug aufgetragen. In Fig. 5b ist auf der Abszisse eine am Fahrzeug gemessene Gierrate 504 in Rad/s aufgetragen.

In Fig. 5a ist eine Differenzgeschwindigkeits-Kennlinie 506 für ein Verschwinden von vorausfahrenden Fahrzeugen gezeigt. Bei niedriger Differenzgeschwindigkeit 502 weist die Mindeststrecke s 500 einen hohen Wert auf. Der hohe Wert bleibt bis zu einem Differenzgeschwindigkeits-Schwellenwert konstant. Dann sinkt die Kennlinie 506 bei steigender Differenzgeschwindigkeit 502 mit konstanter Steigung auf einen niedrigen Wert ab. Ab einem weiteren, höheren Differenzgeschwindigkeits-Schwellenwert verharrt die Mindeststrecke 500 konstant auf dem niedrigen Wert. Damit verändert sich die Mindeststrecke 500 zwischen einem Maximalwert und einem Minimalwert, wobei die Mindeststrecke 500 in einem Differenzgeschwindigkeits-Bereich umso kleiner wird, je größer die Differenzgeschwindigkeit 502 ist.

In Fig. 5b ist eine Gierraten-Kennlinie 506 gezeigt. Bei niedriger Gierrate 504 weist die Mindeststrecke s 500 einen niedrigen Wert auf. Der niedrige Wert bleibt bis zu einem Gierraten-Schwellenwert konstant. Dann steigt die Kennlinie 506 bei steigender Gierrate 504 mit konstanter Steigung auf einen hohen Wert an. Ab einem weiteren, höheren Gierraten-Schwellenwert verharrt die Mindeststrecke 500 konstant auf dem hohen Wert. Damit verändert sich die Mindeststrecke 500 zwischen einem Minimalwert und einem Maximalwert, wobei die Mindeststrecke 500 in einem Gierraten-Bereich umso größer wird, je größer die Gierrate 504 ist.

Fig. 6 zeigt eine Darstellung einer Fahrsituation in der das Fernlicht eines Fahrzeugs 100 aktiviert wird, nachdem das Fahrzeug 100 eine Mindeststrecke 500 gemäß einem Ausführungsbeispiel der vorliegenden Erfindung durchfahren hat. Gezeigt ist eine Straße 602 mit je einem Richtungsfahrstreifen. Die Richtungsfahrstreifen sind durch eine unterbrochene Mittenmarkierung getrennt. Ein Fahrzeug 100 wird von einem entgegenkommenden Fahrzeug 604 passiert. Es ist dunkel, das Fahrzeug 100 fährt mit Licht. Vor dem Fahrzeug 100 ist ein Blendungsbereich 506 dargestellt. Solange sich das Fahrzeug 604 in dem Blendungsbereich 506 des Fahrzeugs 100 befindet, waren die Scheinwerfer des Fahrzeugs 100 abgeblendet. In diesem vereinfachten Beispiel ist der Blendungsbereich 506 deckungsgleich mit einem Scheinwerferkegel des Fernlichts vor dem Fahrzeug 100 dargestellt. Als das entgegenkommende Fahrzeug 604 den Blendungsbereich verlassen hat, beginnt das Steuergerät des Fahrzeugs 100 zum Einschalten des Fernlichts im Fahrzeug 100 eine zurückgelegte Wegstrecke 500 des Fahrzeugs 100 zu ermitteln. Sobald die ermittelte Wegstrecke 500 größer als eine vorbestimmte Mindeststrecke ist, stellt das Steuergerät eine Einschaltinformation bereit und das Fernlicht wird aktiviert. Während das Fahrzeug 100 die Mindeststrecke zurücklegt, legt das entgegenkommende Fahrzeug 604 ebenfalls eine Wegstrecke zurück.

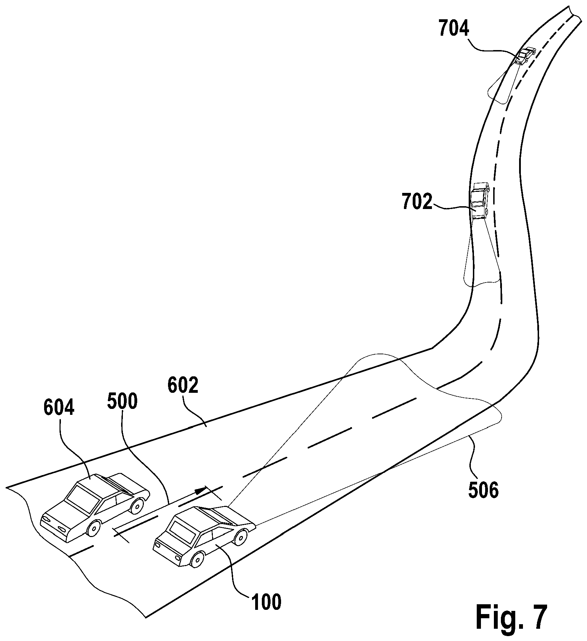

Fig. 7 zeigt eine Darstellung einer weiteren Fahrsituation in der das Fernlicht eines Fahrzeugs 100 gemäß einem Ausführungsbeispiel der vorliegenden Erfindung aktiviert wird. Wie in Fig. 6 ist das Fahrzeug 100 auf der Straße 602 von einem entgegenkommenden Fahrzeug 604 passiert worden. Im Blendungsbereich 506 befindet sich kein anderer Verkehrsteilnehmer. Das Fahrzeug 100 hat die Mindeststrecke 500 zurückgelegt, deshalb ist das Fernlicht vom Steuergerät zum Einschalten des Fernlichts aktiviert worden. Dem Fahrzeug 100 kommen zwei weitere Fahrzeuge 702, 704 entgegen, die bereits von der Umfelderfassungseinrichtung des Fahrzeugs 100 erfasst werden. Bis das erste der Fahrzeuge 702, 704 in den Blendungsbereich 506 des Fahrzeugs 100 eintritt wird eine vorausberechnete Zeitdauer verstreichen. Gemäß diesem Ausführungsbeispiel ist die vorausberechnete Zeitdauer größer als eine vorgegebene Mindesteinschaltdauer für das Fernlicht. Daher wird trotz des Erkennens der entgegenkommenden Fahrzeuge 702,704 das Fernlicht eingeschaltet. Das Fernlicht wird dann deaktiviert werden, wenn das erste entgegenkommende Fahrzeug 702 in den Blendungsbereich 506 eintritt.

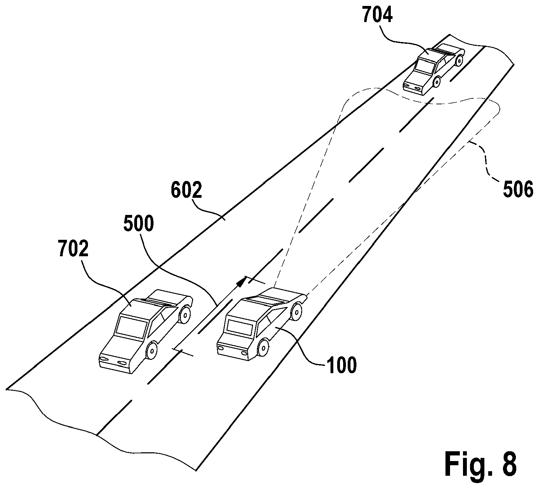

Fig. 8 zeigt eine Darstellung einer Fahrsituation in der das Fernlicht eines Fahrzeugs 100 nicht aktiviert wird, nachdem das Fahrzeug 100 eine Mindeststrecke gemäß einem Ausführungsbeispiel der vorliegenden Erfindung durchfahren hat weil eine Mindestleuchtdauer bis zu einer darauffolgenden Deaktivierung nicht erreichbar ist. Gezeigt ist ein späterer Zeitpunkt als in Fig. 7. Die beiden entgegenkommenden Fahrzeuge 702,704 haben das Fahrzeug 100 erreicht. Das Fahrzeug 702 hat das Fahrzeug 100 bereits passiert. Das Fahrzeug 100 hat die Mindeststrecke 500 zurückgelegt und kein Verkehrsteilnehmer befindet sich im Blendungsbereich 506. Trotzdem wird das Fernlicht nicht aktiviert. Im Steuergerät wird erkannt, dass eine erreichbare Leuchtdauer für das Fernlicht kleiner als eine Mindestleuchtdauer sein wird, da das Fahrzeug 704 bereits kurz davor ist, den Blendungsbereich 506 zu erreichen. Deshalb wird das Fernlicht nicht angeschaltet. Dadurch wird vermieden, den Fahrer des Fahrzeugs 704 kurzzeitig anzublinken. Ein zu kurzes Aufleuchten des Fernlichts kann als Lichtsignal, wie eine Lichthupe verstanden werden und könnte zu Missverständnissen führen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Einschalten eines Fernlichts eines Fahrzeugs (100), mit folgenden Schritten:
Empfangen (302) einer Aufblendinformation über eine Schnittstelle, wobei die Aufblendinformation eine Möglichkeit zum blendfreien Betreiben des Fernlichts anzeigt;
**gekennzeichnet durch**:
Ermitteln (304) einer zurückgelegten Wegstrecke des Fahrzeugs, ansprechend auf das Empfangen der Aufblendinformation; und
Bereitstellen (306) einer Einschaltinformation zum Einschalten des Fernlichts, wenn die zurückgelegte Wegstrecke (500) nach dem Empfangen der Aufblendinformation größer als eine vorbestimmte Mindeststrecke (500) ist, wobei die Mindeststrecke (500) unter Berücksichtigung einer Information über eine aktuelle Verkehrsdichte bestimmt wird.

2. Verfahren gemäß Anspruch 1, bei dem im Schritt (306) des Bereitstellens die Einschaltinformation bereitgestellt wird, wenn die Aufblendinformation während eines Durchfahrens der vorbestimmten Mindeststrecke (500) nach dem Empfangen (302) der Aufblendinformation kontinuierlich Bestand hat.

3. Verfahren gemäß einem der vorangegangenen Ansprüche, bei dem im Schritt (306) des Bereitstellens die vorbestimmte Mindeststrecke (500) unter Berücksichtigung einer Straßenklasse auf der sich das Fahrzeug (100) befindet und/oder einer Straßenform in einem Bereich, in dem sich das Fahrzeug befindet bestimmt wird.

4. Verfahren gemäß einem der vorangegangenen Ansprüche, bei dem im Schritt (306) des Bereitstellens die vorbestimmte Mindeststrecke (500) ferner unter Berücksichtigung eines aktuellen Fahrzustands des Fahrzeugs (100) bestimmt wird.

5. Verfahren gemäß einem der vorangegangenen Ansprüche, mit einem Schritt des Bestimmens eines voraussichtlichen Ausschaltzeitpunkt zum Ausschalten des Fernlichts, und wobei im Schritt (306) des Bereitstellens die Einschaltinformation zum Einschalten des Fernlichts bereitgestellt wird, wenn zwischen einem Zeitpunkt des Bereitstellens der Einschaltinformation und dem voraussichtlichen Ausschaltzeitpunkt eine vorbestimmte Mindesteinschaltdauer für das Fernlicht liegt.

6. Verfahren gemäß einem der vorangegangenen Ansprüche, bei dem im Schritt (306) des Bereitstellens die vorbestimmte Mindeststrecke (500) unter Berücksichtigung von zumindest einer hinterlegten Kennlinie (506) angepasst wird, wobei die Kennlinie einen Zusammenhang zwischen der Mindeststrecke und einem aktuell ermittelten Parameter (502/504) darstellt.

7. Verfahren gemäß einem der vorhergehenden Ansprüche, bei dem im Schritt (306) des Bereitstellens die vorbestimmte Mindeststrecke (500) unter Verwendung eines empirischen Fernlichtaktivierungsmodells mit zumindest zwei Eingangsgrößen bestimmt wird.

8. Steuergerät (120) zum Einschalten eines Fernlichts eines Fahrzeugs (100), mit einer Einrichtung (202) zum Empfangen einer Aufblendinformation über eine Schnittstelle, wobei die Aufblendinformation eine Möglichkeit zum blendfreien Betreiben des Fernlichts anzeigt;
**gekennzeichnet durch**:
eine Einrichtung (204) zum Ermitteln einer zurückgelegten Wegstrecke (500) des Fahrzeugs, die ansprechend auf das Empfangen der Aufblendinformation die zurückgelegte Wegstrecke ermittelt; und
eine Einrichtung (206) zum Bereitstellen einer Einschaltinformation zum Einschalten des Fernlichts, wenn die zurückgelegte Wegstrecke nach dem Empfangen der Aufblendinformation größer als eine vorbestimmte Mindeststrecke (500) ist, wobei die vorbestimmte Mindeststrecke (500) unter Berücksichtigung einer Information über eine aktuelle Verkehrsdichte bestimmt wird.

9. Computer-Programmprodukt mit Programmcode zur Durchführung des Verfahrens nach einem der Ansprüche 1 bis 7, wenn das Programm auf einem Informationssystem ausgeführt wird.

## Claims

1. Method for switching on a high beam of a vehicle (100), comprising the following steps:
receiving (302) light expansion information via an interface, wherein the light expansion information indicates a possibility for operating the high beam without glare,
**characterized by**:
ascertaining (304) a travelled path distance of the vehicle in reaction to the receiving of the light expansion information; and
providing (306) switch-on information for switching on the high beam if the travelled path distance (500) after receiving the light expansion information is greater than a predetermined minimum distance (500), wherein the minimum distance (500) is determined taking into account information relating to a current traffic density.

2. Method according to Claim 1, in which, in the providing step (306), the switch-on information is provided if the light expansion information continuously persists during the travelling of the predetermined minimum distance (500) after the receiving (302) of the light expansion information.

3. Method according to either of the preceding claims, in which, in the providing step (306), the predetermined minimum distance (500) is determined taking into account a road class on which the vehicle (100) is located and/or a road form in a region in which the vehicle is located.

4. Method according to one of the preceding claims, in which, in the provision step (306), the predetermined minimum distance (500) is determined furthermore taking into account a current vehicle state of the vehicle (100) .

5. Method according to one of the preceding claims, comprising a step of determining an expected switch-off time point for switching off the hight beam, and wherein, in the provision step (306), the switch-on information is provided for switching on the hight beam if a predetermined minimum switch-on time period for the high beam lies between a time point at which the switch-on information is provided and the expected switch-off time point.

6. Method according to one of the preceding claims, in which, in the provision step (306), the predetermined minimum distance (500) is adapted taking into account at least one stored characteristic (506), wherein the characteristic represents a relationship between the minimum distance and a currently ascertained parameter (502/504).

7. Method according to one of the preceding claims, in which, in the provision step (306), the predetermined minimum distance (500) is determined by using an empirical high-beam activation model with at least two input variables.

8. Control device (120) for switching on a high beam of a vehicle (100), comprising
a device (202) for receiving light expansion information via an interface, wherein the light expansion information indicates a possibility for operating the hight beam without glare;
**characterized by**:
a device (204) for ascertaining a travelled path distance (500) of the vehicle, which device ascertains the travelled path distance in reaction to the receiving of the light expansion information; and
a device (206) for providing switch-on information for switching on the high beam if the travelled path distance after receiving the light expansion information is greater than a predetermined minimum distance (500), wherein the predetermined minimum distance (500) is determined taking into account information relating to a current traffic density.

9. Computer program product with program code for performing the method according to one of Claims 1 to 7 if the program is executed on an information system.

## Revendications

1. Procédé d'allumage d'un feu de route d'un véhicule (100), comprenant les étapes suivantes :
réception (302) d'une information d'allumage des feux de route par le biais d'une interface, l'information d'allumage des feux de route indiquant une possibilité de fonctionnement sans éblouissement du feu de route ;
**caractérisé par** :
l'identification (304) d'une distance parcourue du véhicule, en réaction à la réception de l'information d'allumage des feux de route ; et
la fourniture (306) d'une information d'allumage pour l'allumage du feu de route lorsque la distance parcourue (500) après la réception de l'information d'allumage des feux de route est supérieure à un trajet minimal (500) prédéterminé, le trajet minimal (500) étant déterminé en tenant compte d'une information à propos d'une densité de trafic actuelle.

2. Procédé selon la revendication 1, avec lequel à l'étape (306) de fourniture, l'information d'allumage est fournie lorsque l'information d'allumage des feux de route est présente continuellement pendant un parcours du trajet minimal (500) prédéterminé après la réception (302) de l'information d'allumage des feux de route.

3. Procédé selon l'une des revendications précédentes, avec lequel à l'étape (306) de fourniture, le trajet minimal (500) prédéterminé est déterminé en tenant compte d'une catégorie de route sur laquelle se trouve le véhicule (100) et/ou d'une forme de route dans une zone dans laquelle se trouve le véhicule.

4. Procédé selon l'une des revendications précédentes, avec lequel à l'étape (306) de fourniture, le trajet minimal (500) prédéterminé est en plus déterminé en tenant compte d'un état de déplacement actuel du véhicule (100) .

5. Procédé selon l'une des revendications précédentes, comprenant une étape de détermination d'un instant d'extinction probable pour l'extinction du feu de route, et à l'étape (306) de fourniture, l'information d'allumage est fournie pour l'allumage du feu de route si une durée d'allumage minimale du feu de route est présente entre l'instant de fourniture de l'information d'allumage et l'instant d'extinction probable.

6. Procédé selon l'une des revendications précédentes, avec lequel à l'étape (306) de fourniture, le trajet minimal (500) prédéterminé est adapté en tenant compte d'au moins une courbe caractéristique (506) enregistrée, la courbe caractéristique représentant une relation entre le trajet minimal et un paramètre (502/504) identifié actuel.

7. Procédé selon l'une des revendications précédentes, avec lequel à l'étape (306) de fourniture, le trajet minimal (500) prédéterminé est déterminé en utilisant un modèle empirique d'activation de feu de route ayant au moins deux grandeurs d'entrée.

8. Contrôleur (120) destiné à allumer un feu de route d'un véhicule (100), comprenant
un dispositif (202) destiné à recevoir une information d'allumage des feux de route par le biais d'une interface, l'information d'allumage des feux de route indiquant une possibilité de fonctionnement sans éblouissement du feu de route ;
**caractérisé par** :
un dispositif (204) destiné à identifier une distance parcourue (500) du véhicule, qui identifie la distance parcourue en réaction à la réception de l'information d'allumage des feux de route ; et
un dispositif (206) destiné à fournir une information d'allumage pour l'allumage du feu de route lorsque la distance parcourue après la réception de l'information d'allumage des feux de route est supérieure à un trajet minimal (500) prédéterminé, le trajet minimal (500) prédéterminé étant déterminé en tenant compte d'une information à propos d'une densité de trafic actuelle.

9. Produit de programme informatique comprenant un code de programme destiné à mettre en œuvre le procédé selon l'une des revendications 1 à 7 lorsque le programme est exécuté sur un système d'information.
